# FASCICULE DE BREVET EUROPEEN

(11) **EP 3 939 214 B1**
(45) Date de publication et mention de la délivrance du brevet: **08.03.2023**
(21) Numéro de dépôt: 20709222.2
(22) Date de dépôt: 12.03.2020
(51) Int. Cl.: H04L 12/46, H04L 12/40, H04L 47/193, H04L 47/2475, H04W 12/121, H04L 9/40, H04L 69/18, H04L 67/12

(54) **RÉDUCTION DE LA SURFACE D'ATTAQUE DANS UN SYSTÈME DE COMMUNICATIONS**
REDUZIERUNG DER ANGRIFFSFLÄCHE IN EINEM KOMMUNIKATIONSSYSTEM
REDUCTION OF THE ATTACK SURFACE IN A COMMUNICATIONS SYSTEM

(30) Priorité: 15.03.2019 FR 1902678
(43) Date de publication de la demande: 19.01.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: LANCERICA, Laurent, 31100 Toulouse (FR); MANGÉ, Jean-Baptiste, 78280 Guyancourt (FR); SOUM, Redouane, 06730 Saint andre de la roche (FR)
(74) Mandataire: Renault Group
(86) Numéro de dépôt international: PCT/EP2020/056666
(87) Numéro de publication internationale: WO 2020/187689

(56) Documents cités:
- EP-A1- 3 240 256
- US-A1- 2013 201 316
- LASTINEC JAN ET AL: "Comparative analysis of TCP/IP security protocols for use in vehicle communication", 2016 17TH INTERNATIONAL CARPATHIAN CONTROL CONFERENCE (ICCC), IEEE, 29 mai 2016 (2016-05-29), pages 429-433, XP032917148, DOI: 10.1109/CARPATHIANCC.2016.7501136

## Description

L'invention concerne le domaine des transferts des données au sein des systèmes de communications sans fil, et plus particulièrement la sécurité des transferts de données mis en oeuvre par un équipement de communications.

Un des problèmes de la sécurité informatique est l'introduction dans l'environnement logiciel d'un système informatique des programmes non-approuvés. L'ensemble des points d'accès par lesquels un utilisateur non-autorisé pourrait introduire des tels programmes dans un système informatique est connu sous la dénomination de « surface d'attaque » du système. Des tels points d'accès sont, par exemple, les points d'accès aux services des différentes couches d'une pile de protocoles de communication, en particulier de la couche TCP/IP (Transmission Control Protocol/Internet Protocol). Réduire la surface d'attaque d'un système informatique constitue une mesure de sécurité importante.

Les véhicules deviennent de plus en plus complexes et comprennent un nombre croissant d'unités électroniques de contrôle, pour offrir davantage de fonctionnalités à l'utilisateur final. Ces unités électroniques de contrôle sont munies d'interfaces de communication, pour établir directement ou indirectement des liens avec des systèmes informatiques distants, via des réseaux de télécommunications, permettant ainsi aux véhicules de devenir «connectés», mais introduisant une nouvelle menace potentielle de cyberattaque.

Dans certaines architectures, les unités électroniques de contrôle d'un véhicule accèdent aux réseaux de télécommunications étendus, par exemple Internet, par l'intermédiaire d'un système de communications disposant d'un modem RF (Radio Fréquence), apte à établir des communications au sein de ces réseaux de télécommunications étendus. Ainsi, le système de communications effectue à la fois des transferts des données liés à ses propres applications, et des transferts de données entre les autres unités électroniques de contrôle du véhicule et les réseaux de télécommunications étendus. Le système de communications et les unités électroniques de contrôle sont interconnectés au sein d'un réseau local, et le système de communications redirige les flux de données en provenance et à destination des unités électroniques de contrôle en accord avec les adresses attribuées à ces unités dans le réseau local et avec les adresses sources et destinations des paquets de données.

Dans les systèmes classiques, la redirection est faite par le système de communications fournissant l'accès aux réseaux de télécommunications étendus, grâce à une technique de traduction des adresses réseau, NAT (abréviation des termes anglais « *Network Address Translation »),* qui est mise en oeuvre dans la couche TCP/IP d'une pile de protocoles s'exécutant dans l'environnement logiciel dudit système de communications. Dans ce cas, un flux de données reçu depuis un réseau étendu doit être traité par la pile de protocoles TCP/IP exécutée par le système de communications, même si ce dernier n'est pas le destinataire des données. Ainsi, des données non-autorisées peuvent s'introduire dans l'environnement logiciel du système de communications.

Certains flux de données, par exemple des contenus multimédia, ne sont pas systématiquement sécurisés; les traiter par la pile de protocoles TCP/IP du système de communications pourrait créer des failles de sécurité, mais les rejeter pourrait conduire à une mauvaise expérience utilisateur. Ainsi, il y a un besoin d'assurer le transfert de données entre les différentes unités électroniques de contrôle et les réseaux de télécommunications étendus, sans exposer le système de communications à des cyberattaques.

On connaît du document CN101127698 B un système et un procédé pour réaliser une sélection de routage basée sur les services, et nécessitant une identification du flux de données, ce qui suppose l'implication des couches supérieures de la pile de protocoles. Le document "Comparative analysis of TCP/IP security protocols for use in vehicle communication" (XP032917148), traite de protocoles TCP/IP de sécurité pour réseaux embarqués et énumère d'un côté une série de protocoles de sécurité au niveau de couches supérieures utilisant le protocole TCP et d'un autre un mode "Tunnel" pour des protocoles de sécurité IPsec et ESP, indiqué dans des situations où un "tunnel" sécurisé est requis entre deux réseaux IP, la connexion sécurisée se terminant au niveau d'un appareil dédié supportant un VPN ("Virtual Private Network"). Toutefois, il ne prend en considération, dans son analyse comparative et simulations, que du trafic interne au véhicule, entre segments CAN de celui-ci. Il ne traite en aucune manière de l'élaboration de paquets à destination ou en provenance d'un réseau externe.

Par conséquent, il y a un besoin de pouvoir acheminer les données entre les réseaux de télécommunications étendus et les unités électroniques de contrôle du véhicule, qui n'impose pas une identification préalable du flux par examination des données, tout en préservant la sécurité de l'environnement logiciel du système de communications.

Un but de la présente invention est de répondre aux inconvénients de l'art antérieur mentionnés ci-dessus.

Pour cela, un premier aspect de l'invention concerne un procédé d'acheminement de paquets de données en provenance ou à destination d'au moins une unité électronique de contrôle, dits paquets sortants, respectivement paquets entrants, ladite au moins une unité électronique de contrôle étant connectée à un système de communications via une première interface, ledit système de communications étant connecté via une deuxième interface à un modem apte à transférer lesdits paquets sortants et lesdits paquets entrants vers, respectivement depuis au moins un réseau de télécommunications par l'intermédiaire d'une pluralité de points d'accès, chaque point d'accès étant de type sécurisé ou de type non-sécurisé, et étant en correspondance avec une unité de contrôle électronique, le procédé étant exécuté par le système de communications et comprenant :
- une étape de traitement entrant ; et/ou
- une étape de traitement sortant.

L'étape de traitement entrant comprend :
- une première étape de réception, par l'intermédiaire de la deuxième interface, d'un paquet entrant et d'un identifiant d'un point d'accès par l'intermédiaire duquel ledit paquet entrant a été reçu par le modem depuis ledit réseau de télécommunications, dit point d'accès de réception ;
- une première étape de détermination d'un type du point d'accès de réception. Si ledit point d'accès de réception est de type non-sécurisé, le procédé comprend ensuite une première étape d'identification d'une unité électronique de contrôle correspondant au point d'accès de réception, dite unité destinataire, et une première étape de transfert dudit paquet entrant vers l'unité destinataire au niveau d'une couche de liaison de données d'une pile de protocoles TCP/IP, par l'intermédiaire de la première interface, sans impliquer la couche TCP/IP. Si ledit point d'accès de réception est de type sécurisé, le procédé comprend ensuite une première étape de traitement interne dudit paquet entrant par une pile de protocoles de télécommunications TCP/IP exécutée par le système de communications.

L'étape de traitement sortant comprend :
- une deuxième étape de réception par l'intermédiaire de la première interface d'un paquet sortant, en provenance d'une unité électronique de contrôle, dite unité source ;
- une deuxième étape d'identification d'un point d'accès correspondant à l'unité électronique source, dit point d'accès d'émission ;
- une deuxième étape de détermination d'un type du point d'accès d'émission. Si ledit point d'accès d'émission est de type non-sécurisé, le procédé comprend ensuite une deuxième étape de transfert dudit paquet sortant et d'un identifiant dudit point d'accès d'émission au niveau d'une couche de liaison de données d'une pile de protocoles TCP/IP, vers le modem, par l'intermédiaire de la deuxième interface, sans impliquer la couche TCP/IP de ladite pile. Si ledit point d'accès d'émission est de type sécurisé, le procédé comprend ensuite une deuxième étape de traitement interne dudit paquet sortant par une pile de protocoles de télécommunications TCP/IP exécutée par le système de communications.

Suivant des modes de réalisation préférés, l'invention comprend une ou plusieurs des caractéristiques suivantes qui peuvent être utilisées séparément ou en combinaison partielle entre elles ou en combinaison totale entre elles.

La première interface comprend une couche physique de transmission de données et une pluralité de couches logiques pour la mise en oeuvre d'au moins une partie d'un réseau virtuel sécurisé comprenant un point d'accès sécurisé, et d'un réseau local de type point à point mettant en oeuvre une couche de liaison de données entre ladite au moins une unité électronique de contrôle et ledit système de communications . La première étape de transfert comprend une première sous-étape d'ajout d'en-tête conforme à la couche de liaison de données audit paquet entrant ; et/ou la deuxième étape de transfert comprend une deuxième sous-étape d'ajout d'en-tête conforme au protocole de liaison de données entre ledit système de communications et ledit modem, audit paquet sortant.

La première étape de transfert peut comprendre une première sous-étape de confirmation de prise en charge dudit paquet entrant.

Dans un mode de réalisation préféré,
- l'au moins un réseau de télécommunications est un réseau de communications avec des équipements mobiles de communication;
- la première étape de traitement interne et/ou deuxième étape de traitement interne comprend une première, respectivement deuxième sous-étape de translation d'adresse, NAT, entre l'au moins un réseau de télécommunications et la partie du réseau virtuel sécurisé ; et
- la première interface est une interface Ethernet.

L'invention concerne aussi un programme d'ordinateur comportant des instructions qui, lorsqu'exécutées par un processeur d'un système informatique, entraînent la mise en oeuvre d'un procédé d'acheminement de paquets de données tel que précédemment décrit.

L'invention concerne aussi un système de communications apte à être connecté
- via une première interface à au moins une unité électronique de contrôle ; et
- via une deuxième interface à un modem apte à transférer des paquets de données en provenance ou à destination de ladite au moins une unité électronique de contrôle, dits paquets sortants, respectivement paquets entrants, vers, respectivement depuis, au moins un réseau de télécommunications par l'intermédiaire d'une pluralité de points d'accès, chaque point d'accès étant de type sécurisé ou de type non-sécurisé, et étant en correspondance avec une unité de contrôle électronique.

Ledit système de communications comprend en outre :
- des premiers moyens de réception depuis ladite au moins une unité électronique de contrôle, dite unité source, d'un paquet sortant ;
- des moyens d'identification d'un point d'accès correspondant à l'unité électronique source, dit point d'accès d'émission ;
- des deuxièmes moyens de réception depuis le modem d'un paquet entrant et d'un identifiant d'un point d'accès par l'intermédiaire duquel ledit paquet entrant a été reçu par le modem depuis ledit réseau de télécommunications, dit point d'accès de réception ;
- des moyens de détermination d'un type du point d'accès d'émission et/ou du point d'accès de réception ;
- des moyens de transfert au niveau d'une couche de liaison d'une pile de protocoles TCP/IP, sans impliquer la couche TCP/IP de ladite pile,
   o dudit paquet sortant et de l'identifiant dudit point d'accès d'émission vers le modem si le type du point d'accès d'émission est non-sécurisé,
   o dudit paquet entrant vers l'unité destinataire si le type du point d'accès de réception est non-sécurisé;
- des moyens de traitement interne dudit paquet entrant et/ou dudit paquet sortant par une pile de protocoles de télécommunications TCP/IP si le type du point d'accès de réception est sécurisé.

Un autre aspect de l'invention concerne un équipement mobile de communications comprenant un système de communications tel que précédemment décrit, et au moins une unité électronique de contrôle, connectés via une première interface de type mémoire partagée, Ethernet, USB, ou CAN.

L'invention concerne aussi un véhicule comprenant un équipement de communications tel que précédemment décrit.

D'autres caractéristiques et avantages de la présente invention apparaîtront plus clairement à la lecture de la description détaillée qui suit, donnée à titre d'exemple nullement limitatif, et illustrée par les dessins annexés, dans lesquels :
[Fig.1] représente schématiquement un exemple d'équipement de communications sans fil pouvant mettre en oeuvre l'invention.
[Fig.2] représente schématiquement l'architecture d'un équipement de communications sans fil pouvant mettre en oeuvre l'invention.
[Fig.3] représente schématiquement les étapes d'un procédé d'acheminement de paquets de données, selon un mode de réalisation de l'invention.
[Fig.4] représente schématiquement une étape de traitement entrant du procédé d'acheminement de paquets de données, selon un mode de réalisation de l'invention.
[Fig.5] représente schématiquement une étape de traitement sortant du procédé d'acheminement de paquets de données, selon un mode de réalisation de l'invention.

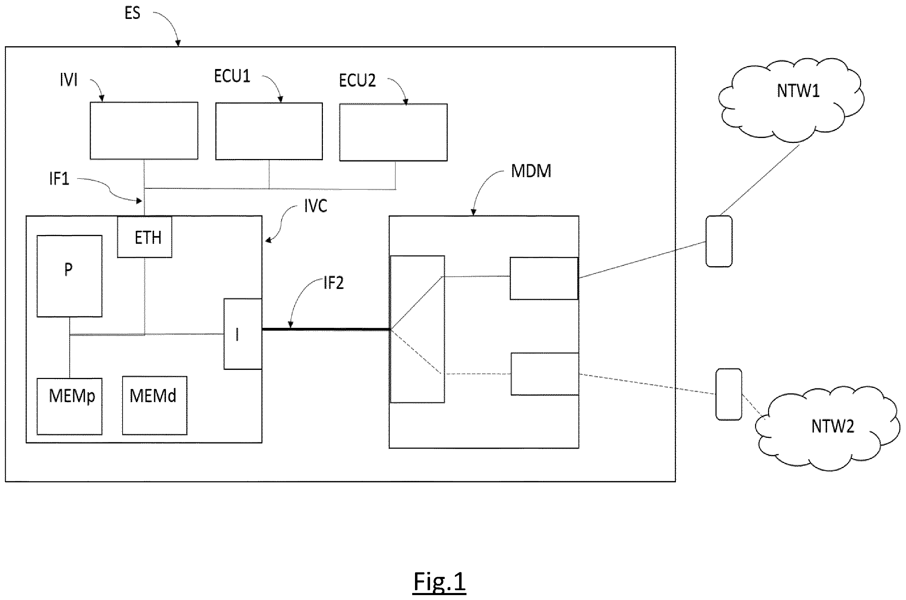

En figure 1 est représenté schématiquement un équipement de communications sans fil ES pouvant mettre en oeuvre l'invention. Cet équipement ES, par exemple un système de gestion multimédia d'un véhicule, est connecté à deux réseaux de télécommunications étendus NTW1, NTW2.

L'équipement de communications ES comprend un système multimédia IVI, deux unités électroniques de contrôle ECU1, ECU2 pour fournir des services applicatifs et un système de communications IVC, connectés via une première interface IF1. Le système multimédia IVI est lui-même assimilé à une unité de contrôle dans cette demande car intégrant un calculateur.

Le système de communications IVC dispose d'un modem radiofréquences MDM, par exemple un modem multimodes GPRS, UMTS, et LTE, permettant la connexion du système de communications IVC, et par son intermédiaire, des unités électroniques de contrôle IVI, ECU1, ECU2, aux réseaux de télécommunications étendus NTW1, NTW2.

Les unités électroniques de contrôle IVI, ECU1, ECU2 accèdent aux réseaux de télécommunications étendus par l'intermédiaire des points d'accès APN1, APN2. Chaque point d'accès peut être de type sécurisé, si les données transitant par ce point d'accès sont considérées comme ne présentant pas de risque pour la sécurité du système informatique, ou de type non-sécurisé dans le cas contraire. Chaque point d'accès est en correspondance avec une unité électronique de contrôle et inversement.

Le modem radiofréquences MDM est connecté au système de communications IVC par une interface IF2.

Le système de communications IVC comprend également un processeur P, des mémoires MEMp, MEMd, pour stocker des programmes et des données informatiques, et des circuits spécialisés ETH, I, assurant respectivement la connexion aux interfaces de communication IF1, IF2. L'équipement de communications sans fil ES comprend également des moyens spécialisés, pouvant dans certains modes de réalisation être mis en oeuvre par des circuits électroniques coopérant avec des modules logiciels qui utilisent le processeur P et les mémoires MEMp, MEMd :
- des premiers moyens de réception, IF1, ETH, P, MEMp, MEMd, depuis une des unités électroniques de contrôle IVI, ECU1, ECU2, dite unité source, d'un paquet sortant ;
- des moyens d'identification d'un point d'accès APN1, APN2, correspondant à l'unité électronique source IVI, ECU1, ECU2, dit point d'accès d'émission;
- des deuxièmes moyens de réception IF2, I, P, MEMp, MEMd, depuis le modem MDM d'un paquet entrant et d'un identifiant d'un point d'accès APN1, APN2 par l'intermédiaire duquel ledit paquet entrant a été reçu par le modem MDM depuis ledit réseau de télécommunications NTW1, NTW2, dit point d'accès de réception;
- des moyens de détermination P, MEMp, MEMd, d'un type du point d'accès d'émission et/ou du point d'accès de réception ;
- des moyens de transfert, P, MEMp, MEMd, I, ETH, et des moyens de traitement interne, P, MEMp, MEMd, des paquets entrants et de paquets sortants, en fonction du type de point d'accès de réception, respectivement du type de point d'accès d'émission, comme cela sera expliqué par la suite.

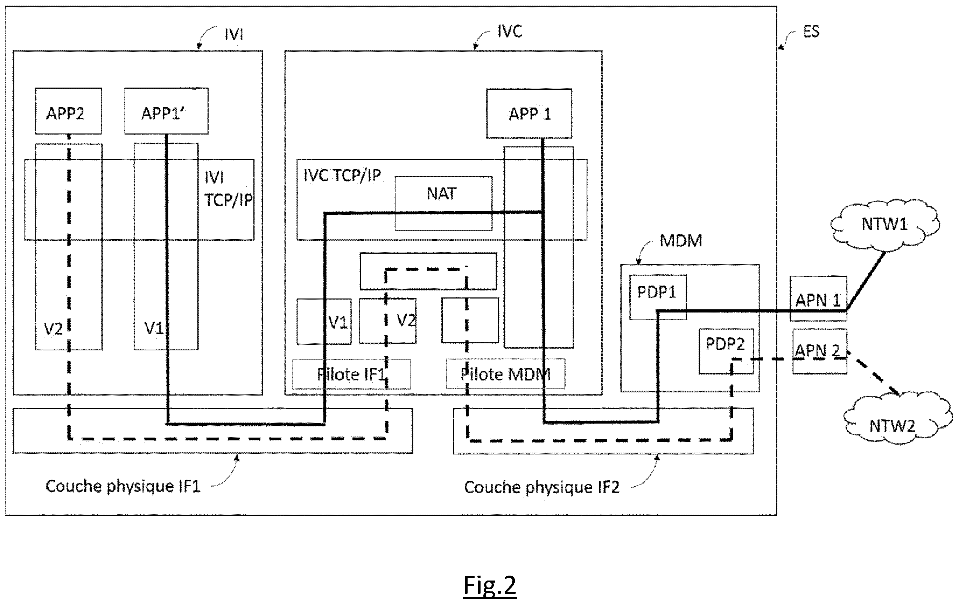

La figure 2 représente schématiquement des éléments d'architecture de l'équipement de communications ES, mettant en évidence des modules fonctionnels impliqués et des chemins de données mis en oeuvre.

A titre d'exemple, une seule unité électronique de contrôle, IVI, est représentée.

Les paquets de données émis par une unité électronique de contrôle électronique IVI, à destination d'un réseau étendu NTW1, NTW2, sont envoyés par l'unité unité électronique émettrice IVI, via la première interface IF1 vers le système de communications IVC, qui les achemine par l'intermédiaire de la deuxième interface IF2 vers le modem radiofréquences MDM, pour émission vers le réseau étendu destinataire NTW1, NTW2.

De manière similaire, les paquets de données en provenance d'un réseau étendu NTW1, NTW2, et à destination d'une unité électronique de contrôle électronique IVI, ECU1, ECU2, sont reçus par le modem radiofréquences MDM, et ensuite transmis au système de communications IVC via la deuxième interface IF2, pour acheminement vers l'unité électronique destinataire.

Le système de communications IVC met en oeuvre des modules « pilotes d'interface », pour le contrôle des interfaces IF1, IF2. Dans l'exemple illustré, la première interface IF1 est une interface de type Ethernet, contrôlée par le module « Pilote IF1 » et la deuxième interface IF2 est une interface de type mémoire partagée (shared mémory), contrôlée par le module « Pilote MDM».

Pour communiquer avec les réseaux de télécommunications NTW1, NTW2, le modem radiofréquences MDM met en oeuvre un protocole cellulaire de transport de paquets IP : le protocole « PDP », abréviation des termes anglais « Packet Data Protocol ». Conformément à ce protocole PDP, le modem MDM définit des structures de données, de type dit « PDP context », et utilisées pour traiter et router les flux de données dans les réseaux de télécommunications NTW1, NTW2. Le modem MDM expose une structure de type « PDP context » pour chaque point d'accès utilisé. Ainsi, grâce à l'utilisation du protocole PDP et des structures de données de type « PDP contexte », le point d'accès par l'intermédiaire duquel un paquet de données est reçu par le modem MDM peut être identifié.

Comme déjà mentionné, chaque point d'accès APN1, APN2, est associé à une unité de contrôle électronique IVI, ECU1, ECU2. Cette association peut être déterminée par les services fournis à un utilisateur de l'équipement de communications ES. Par exemple l'IVI doit avoir une connexion au réseau internet NTW2 considéré comme non sécurisé. L'IVI nécessite également une connexion au réseau interne du constructeur du véhicule, NTW1, considéré comme sécurisé, pour lequel l'IVC utilise un module de translation d'adresse, NAT, afin de partager cette connexion sécurisée avec l'unité de contrôle IVI.

Dans certains modes de réalisation, la correspondance entre les points d'accès APN1, APN2,..., APNi, et les unités électroniques de contrôle IVI, ECU1, ECU2,..., ECUj, est biunivoque.

Dans d'autres modes de réalisation, une unité électronique de contrôle, ECUk, peut partager sa connexion avec le système de communications IVC avec d'autres unités électroniques de contrôle ECUk1, ECUk2, ECUkn, pour permettre à ces dernières d'accéder à des points d'accès APNk1, APNk2, ..., APNkn non-sécurisés. Dans ce cas, tous les paquets à destination des unités électroniques de contrôle ECUk1, ECUk2, ECUkn, seront transférés par le système de communications IVC vers l'unité électronique de contrôle ECUk. Cette dernière peut ensuite gérer l'adressage des paquets vers les unités électroniques de contrôle ECUk1, ECUk2, ECUkn, selon des techniques connues, par exemple des mécanismes de translation d'adresse.

Dans les deux cas, le procédé d'acheminement de paquets de données selon l'invention assure le transfert de paquets en provenance ou à destination d'un point d'accès non-sécurisé sans impliquer la couche TCP/IP de la pile de protocoles mise en oeuvre par le système de communications IVC, permettant ainsi à l'utilisateur un accès à des services fournis par l'intermédiaire de ces points d'accès non-sécurisés, sans exposer le système de communications IVC aux flux de données non-sécurisés.

Dans la suite de ce document, les paquets de données en provenance d'une unité électronique de contrôle sont nommés « paquets sortants », et les paquets de données à destination d'une unité électronique de contrôle, « paquets entrants ». Les traitements appliqués par le système de communication IVC aux paquets de données entrants, respectivement sortants sont nommés « traitement entrant », respectivement « traitement sortant ».

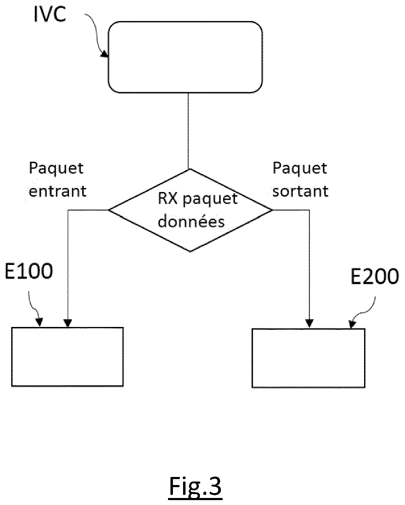

Le procédé d'acheminement mis en oeuvre par le système de communications IVC comprend, comme illustré en figure 3, une étape de traitement entrant E100 et/ou une étape de traitement sortant E200.

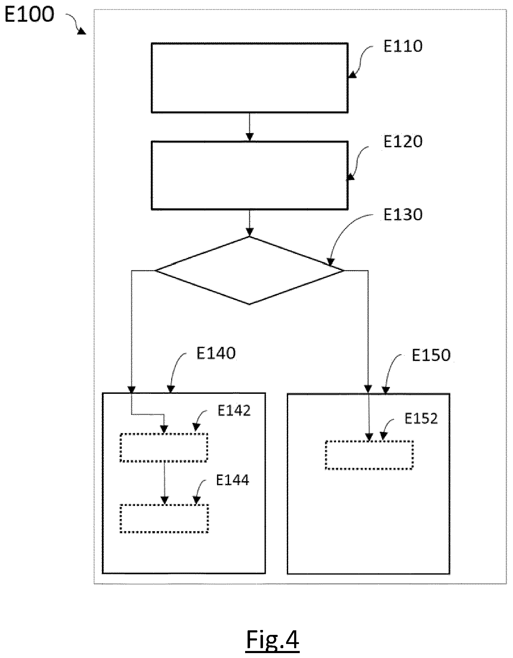

L'étape E100 de traitement entrant selon un mode de réalisation de l'invention sera maintenant détaillée en référence aux figures 2 et 4.

Lors de la réception d'un paquet entrant depuis un réseau de télécommunications NTW1, NTW2, le modem MDM identifie, grâce au protocole PDP et aux structures de données de type « PDP contexte », le point d'accès par l'intermédiaire duquel ce paquet de données a été reçu. L'identifiant de ce point d'accès est transmis, avec le paquet de données reçu, au système de communications IVC, via la deuxième interface IF2.

Le système de communications IVC reçoit, lors d'une première étape de réception E110, par l'intermédiaire de la deuxième interface IF2, le paquet entrant et l'identifiant du point d'accès de réception APN1, APN2. Ces informations sont traitées par le pilote « Pilote MDM».

Ensuite, lors d'une première étape de détermination E120, le type du point d'accès de réception est déterminé. Quand l'IVC demande au modem l'établissement d'une connexion à un APN donné (identifiant un réseau NTW1), l'IVC indique sur quel canal logique de l'IF2 il souhaite pouvoir recevoir et transmettre des données pour cette connexion. C'est l'association APN/Canal logique qui permet à l'IVC de déterminer l'appartenance des données à un réseau NTW1 ou NTW2.

Nous allons supposer dans un premier temps que le paquet entrant est reçu depuis le réseau NTW2 par l'intermédiaire du point d'accès APN2, de type non-sécurisé.

Suite à l'exécution de l'étape E120, il est donc déterminé que le point d'accès de réception est de type non-sécurisé.

Dans ce cas, le système de communications IVC exécute une première étape d'identification E130 de l'unité électronique de contrôle, IVI, correspondant au point d'accès de réception, dite unité destinataire.

Ensuite une première étape de transfert E140 dudit paquet entrant vers l'unité destinataire IVI est exécutée. Lors de cette étape, le transfert est effectué au niveau d'une couche de liaison de données de la pile de protocoles TCP/IP du système de communications IVC, sans impliquer la couche TCP/IP. En d'autres termes, le transfert est opéré sans intervenir sur la couche réseau, en modifiant seulement l'encapsulation des paquets IP, sans effectuer une recopie des données, « memcopy » en anglais, et sans analyser le format et le contenu des paquets.

Seulement les champs de début et de fin des trames transmises par le pilote gérant la couche protocolaire PDP, « Pilote MDM » sont supprimés et remplacés par les champs spécifiques à la couche liaison de données de la première interface IF1 lors d'une sous-étape E142 .

Dans certains modes de réalisation, la première étape de transfert E140 comprend une première sous-étape de confirmation de prise en charge E144 dudit paquet entrant. Cette confirmation peut être utilisée par le pilote gérant la couche protocolaire PDP, « Pilote MDM », de manière similaire aux confirmations de prise en charge émises par la couche TCP/IP lors d'un traitement classique des données.

Le transfert effectué lors de l'étape E140 utilise la première interface IF1, dans l'exemple illustré en figure 2 une interface de type Ethernet. Les paquets IP reçus depuis le pilote gérant la couche protocolaire PDP, « Pilote MDM », sont dans ce cas encapsulés dans des trames Ethernet, par ajout des champs spécifiques à ce protocole. Le champ « adresse de destination » sera renseigné avec l'adresse attribuée à l'unité destinataire IVI dans le réseau local Ethernet constitué au sein de l'équipement de communications ES.

Les trames Ethernet et les paquets IP contenus dans ces trames sont ensuite traités de manière classique par la pile de protocoles TCP/IP de l'unité destinataire IVI, et les données applicatives fournies à l'application APP2.

Bien entendu, d'autres interfaces peuvent être utilisées pour la mise en oeuvre de la première interface IF1, par exemple des interfaces de type USB, ou bus de données CAN.

Le chemin de données mis en oeuvre pour un paquet reçu par l'intermédiaire d'un point d'accès de type non-sécurisé est représenté par le trait pointillé de la figure 2.

Nous allons supposer maintenant que le paquet entrant est reçu depuis le réseau NTW1 par l'intermédiaire du point d'accès APN1, de type sécurisé. Suite à l'exécution de l'étape E120, il est donc déterminé que le point d'accès de réception est de type sécurisé.

Dans ce cas, le système de communications IVC exécute une première étape de traitement interne E150. Le paquet entrant est traité par une pile de protocoles de télécommunications TCP/IP exécutée par le système de communications IVC. Il est à noter que l'application finale APP1, APP1', peut être exécutée par la couche application du système de communications IVC lui-même, ou par la couche application d'une unité électronique de contrôle IVI, ECU1, ECU2. Dans ce dernier cas, le système de communication IVC partage l'accès sécurisé avec les autres unités électroniques de contrôle, selon des techniques de translation d'adresse NAT impliquant la couche TCP/IP. Comme le point d'accès APN1 est de type sécurisé, le traitement interne par la pile de protocoles TCP/IP exécutée par le système de communications IVC préserve la sécurité du système.

Les chemins de données mis en oeuvre pour des paquets reçus par l'intermédiaire du point d'accès de type sécurisé APN1, et destinés à être utilisés par les applications APP1, APP1', exécutées respectivement par le système de communications IVC, et par l'unité électronique de contrôle IVI, sont représentés par les traits continus de la figure 2.

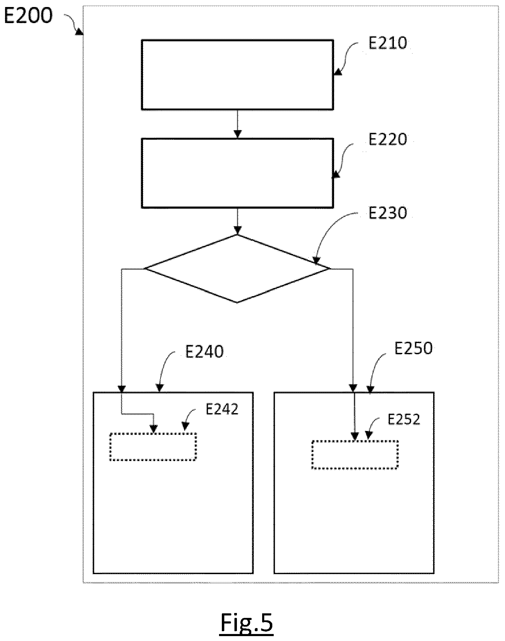

L'étape E200 de traitement sortant selon un mode de réalisation de l'invention sera maintenant détaillée en référence à la figure 5.

Le système de communications IVC reçoit, lors d'une deuxième étape de réception E210, par l'intermédiaire de la première interface, IF1, un paquet sortant, en provenance d'une unité électronique de contrôle, IVI, ECU1, ECU2, dite unité source.

Ensuite, lors d'une deuxième étape d'identification E220, est identifié un point d'accès APN1, APN2, correspondant à l'unité électronique source IVI, ECU1, ECU2, dit point d'accès d'émission.

Le type du point d'accès d'émission APN1, APN2, est déterminé lors d'une deuxième étape de détermination E230.

Si le point d'accès d'émission APN2 est de type non-sécurisé, est exécutée en suite une deuxième étape de transfert E240 du paquet sortant et d'un identifiant du point d'accès d'émission APN1, APN2, vers le modem MDM. Ce transfert est effectué au niveau d'une couche de liaison de données d'une pile de protocoles TCP/IP, par l'intermédiaire de la deuxième interface IF2, sans impliquer la couche TCP/IP de ladite pile. Comme dans le cas de l'étape E100 de traitement entrant, le transfert est opéré sans intervenir sur la couche réseau, en modifiant seulement l'encapsulation des paquets IP, sans effectuer une recopie des données, « memcopy » en anglais, et sans analyser le format et le contenu des paquets.

Seulement les champs de début et de fin des trames transmises par la couche liaison de données de la première interface sont supprimés et remplacés par les champs spécifiques à la couche protocolaire PDP. De cette manière, le système de communications IVC n'est pas exposé aux flux de données non-sécurisés.

Le chemin de données mis en oeuvre pour l'envoi d'un paquet par l'intermédiaire d'un point d'accès de type non-sécurisé est représenté par le trait pointillé de la figure 2.

Si, suite à l'exécution de la deuxième étape de détermination E230, il résulte que le point d'accès d'émission est de type sécurisé, par exemple dans le point d'accès APN1, suit une deuxième étape de traitement interne E250 du paquet sortant, par une pile de protocoles de télécommunications TCP/IP exécutée par le système de communications IVC. Comme dans le cas de l'étape de traitement entrant, le traitement interne effectué lors de l'étape de traitement sortant concerne uniquement les flux de données sécurisés.

Les chemins de données mis en oeuvre pour l'envoi des paquets par l'intermédiaire du point d'accès de type sécurisé APN1, en provenance des applications APP1, APP1', exécutées respectivement par le système de communications IVC, et par l'unité électronique de contrôle IVI, sont représentés par les traits continus de la figure 2. De manière classique, le système de communication IVC partage l'accès sécurisé avec les autres unités électroniques de contrôle, selon des techniques de translation d'adresse NAT impliquant la couche TCP/IP. Comme le point d'accès APN1 est de type sécurisé, le traitement interne par la pile de protocoles TCP/IP exécutée par le système de communications IVC préserve la sécurité du système.

Dans un mode de réalisation préféré, la première interface IF1 comprend une couche physique de transmission de données et une pluralité de couches logiques. Cette configuration permet la mise en oeuvre
- d'au moins une partie d'un réseau virtuel sécurisé V1 comprenant un point d'accès aux services sur une unité électronique de contrôle, IVI, ECU1, ECU2 et le point d'accès sécurisé APN1 ; et
- d'un réseau local de type point à point V2 mettant en oeuvre une couche de liaison de données L2 entre l'unité électronique de contrôle IVI, ECU1, ECU2, et le système de communications IVC.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.]

## Revendications

1. Procédé d'acheminement de paquets de données en provenance ou à destination d'au moins une unité électronique de contrôle (IVI, ECU1, ECU2), dits paquets sortants, respectivement paquets entrants, ladite au moins une unité électronique de contrôle (IVI, ECU1, ECU2) étant connectée à un système de communications (IVC) via une première interface (IF1), ledit système de communications (IVC) étant connecté via une deuxième interface (IF2) à un modem (MDM) apte à transférer lesdits paquets sortants et lesdits paquets entrants vers, respectivement depuis au moins un réseau de télécommunications (NTW1, NTW2) par l'intermédiaire d'une pluralité de points d'accès (APN1, APN2), chaque point d'accès (APN1, APN2) étant de type sécurisé ou de type non-sécurisé, et étant en correspondance avec une unité de contrôle électronique (IVI, ECU1, ECU2), le procédé étant exécuté par le système de communications (IVC) et comprenant :
- une étape de traitement entrant (E100) ; et/ou
- une étape de traitement sortant (E200) ;
dans lequel l'étape de traitement entrant (E100) comprend :
- une première étape de réception (E110), par l'intermédiaire de la deuxième interface (IF2), d'un paquet entrant et d'un identifiant d'un point d'accès (APN1, APN2) par l'intermédiaire duquel ledit paquet entrant a été reçu par le modem (MDM) depuis ledit réseau de télécommunications (NTW1, NTW2), dit point d'accès de réception (APN1, APN2) ;
- une première étape de détermination (E120) d'un type du point d'accès de réception ;
- si ledit point d'accès de réception (APN2) est de type non-sécurisé,
• une première étape d'identification (E130) d'une unité électronique de contrôle (IVI, ECU1, ECU2) correspondant au point d'accès de réception, dite unité destinataire ; et
• une première étape de transfert (E140) dudit paquet entrant vers l'unité destinataire (IVI, ECU1, ECU2) au niveau d'une couche de liaison de données d'une pile de protocoles TCP/IP, par l'intermédiaire de la première interface (IF1), sans impliquer la couche TCP/IP;
- si ledit point d'accès de réception (APN1) est de type sécurisé,
• une première étape de traitement interne (E150) dudit paquet entrant par une pile de protocoles de télécommunications TCP/IP exécutée par le système de communications (IVC) ;
et dans lequel l'étape de traitement sortant (E200) comprend :
- une deuxième étape de réception (E210) par l'intermédiaire de la première interface (IF1) d'un paquet sortant, en provenance d'une unité électronique de contrôle (IVI, ECU1, ECU2), dite unité source ;
- une deuxième étape d'identification (E220) d'un point d'accès (APN1, APN2) correspondant à l'unité électronique source (IVI, ECU1, ECU2), dit point d'accès d'émission ;
- une deuxième étape de détermination (E230) d'un type du point d'accès d'émission (APN1, APN2) ; et,
- si ledit point d'accès d'émission (APN2) est de type non-sécurisé,
• une deuxième étape de transfert (E240) dudit paquet sortant et d'un identifiant dudit point d'accès d'émission (APN1, APN2) au niveau d'une couche de liaison de données d'une pile de protocoles TCP/IP, vers le modem (MDM), par l'intermédiaire de la deuxième interface (IF2), sans impliquer la couche TCP/IP de ladite pile;
- si ledit point d'accès d'émission (APN1) est de type sécurisé,
• une deuxième étape de traitement interne (E250) dudit paquet sortant par une pile de protocoles de télécommunications TCP/IP exécutée par le système de communications (IVC).

2. Procédé d'acheminement selon la revendication 1, dans lequel
• la première interface (IF1) comprend une couche physique de transmission de données et une pluralité de couches logiques pour la mise en oeuvre d'au moins une partie d'un réseau virtuel sécurisé (V1) comprenant un point d'accès sécurisé (APN1), et d'un réseau local de type point à point (V2) mettant en oeuvre une couche de liaison de données (L2) entre ladite au moins une unité électronique de contrôle (IVI, ECU1, ECU2) et ledit système de communications (IVC) ;
et dans lequel
• la première étape de transfert (E140) comprend une première sous-étape d'ajout d'en-tête (E142) conforme à la couche de liaison de données (L2) audit paquet entrant ; et/ou
• la deuxième étape de transfert (E240) comprend une deuxième sous-étape d'ajout d'en-tête (E242) conforme au protocole de liaison de données entre ledit système de communications (IVC) et ledit modem (MDM), audit paquet sortant.

3. Procédé d'acheminement selon une des revendications précédentes, dans lequel la première étape de transfert (E140) comprend une première sous-étape de confirmation de prise en charge (E144) dudit paquet entrant.

4. Procédé d'acheminement selon une quelconque des revendications précédentes, dans lequel :
- l'au moins un réseau de télécommunications (NTW1, NTW2) est un réseau de communication avec des équipements mobiles de communication (ES, EU) ;
- la première étape de traitement interne (E150) et/ou deuxième étape de traitement interne (E250) comprend une première, respectivement deuxième sous-étape de translation d'adresse, NAT, (E152, E252) entre l'au moins un réseau de télécommunications (NTW1, NTW2) et la partie du réseau virtuel sécurisé (V1) ; et
- la première interface (IF1) est une interface Ethernet.

5. Programme d'ordinateur comportant des instructions qui, lorsqu'exécutées par un processeur d'un système informatique, entraînent la mise en oeuvre d'un procédé d'acheminement selon l'une quelconque des revendications 1 à 4.

6. Système de communications (IVC) apte à être connecté
- via une première interface (IF1) à au moins une unité électronique de contrôle (IVI, ECU1, ECU2) ; et
- via une deuxième interface (IF2) à un modem (MDM) apte à transférer des paquets de données en provenance ou à destination de ladite au moins une unité électronique de contrôle (IVI, ECU1, ECU2), dits paquets sortants, respectivement paquets entrants, vers, respectivement depuis, au moins un réseau de télécommunications (NTW1, NTW2) par l'intermédiaire d'une pluralité de points d'accès (APN1, APN2), chaque point d'accès (APN1, APN2) étant de type sécurisé ou de type non-sécurisé, et étant en correspondance avec une unité de contrôle électronique (IVI, ECU1, ECU2) ;
ledit système de communications (IVC) comprenant en outre :
- des premiers moyens de réception (IF1, ETH, P, MEMp, MEMd) depuis ladite au moins une unité électronique de contrôle (IVI, ECU1, ECU2), dite unité source, d'un paquet sortant ;
- des moyens d'identification d'un point d'accès (APN1, APN2) correspondant à l'unité électronique source (IVI, ECU1, ECU2), dit point d'accès d'émission (APN1, APN2) ;
- des deuxièmes moyens de réception (IF2, I, P, MEMp, MEMd) depuis le modem (MDM) d'un paquet entrant et d'un identifiant d'un point d'accès (APN1, APN2) par l'intermédiaire duquel ledit paquet entrant a été reçu par le modem (MDM) depuis ledit réseau de télécommunications (NTW1, NTW2), dit point d'accès de réception (APN1, APN2) ;
- des moyens de détermination (P, MEMp, MEMd) d'un type du point d'accès d'émission et/ou du point d'accès de réception ;
- des moyens de transfert (P, MEMp, MEMd, I, ETH, IF1, IF2) au niveau d'une couche de liaison d'une pile de protocoles TCP/IP, sans impliquer la couche TCP/IP de ladite pile,
o dudit paquet sortant et de l'identifiant dudit point d'accès d'émission (APN1, APN2) vers le modem (MDM) si le type du point d'accès d'émission est non-sécurisé ;
o dudit paquet entrant vers l'unité destinataire (IVI, ECU1, ECU2) si le type du point d'accès de réception est non-sécurisé ;
- des moyens de traitement interne (P, MEMp, MEMd) dudit paquet entrant et/ou dudit paquet sortant par une pile de protocoles de télécommunications TCP/IP si le type du point d'accès de réception est sécurisé.

7. Equipement mobile de communications (ES, UE) comprenant un système de communications (IVC) selon la revendication précédente et au moins une unité électronique de contrôle (IVI, ECU1, ECU2), connectés via une première interface (IF1) de type Ethernet, USB, ou CAN.

8. Véhicule (V) comprenant un équipement de communications (ES, UE) selon la revendication précédente.

## Patentansprüche

1. Verfahren zur Weiterleitung von Datenpaketen von oder zu mindestens einer elektronischen Steuereinheit (IVI, ECU1, ECU2), ausgehende Pakete bzw. eingehende Pakete genannt, wobei die mindestens eine elektronische Steuereinheit (IVI, ECU1, ECU2) über eine erste Schnittstelle (IF1) mit einem Kommunikationssystem (IVC) verbunden ist, wobei das Kommunikationssystem (IVC) über eine zweite Schnittstelle (IF2) mit einem Modem (MDM) verbunden ist, das fähig ist, die ausgehenden Pakete und die eingehenden Pakete mittels einer Vielzahl von Zugangspunkten (APN1, APN2) zu bzw. von mindestens einem Telekommunikationsnetzwerk (NTW1, NTW2) zu übertragen, wobei jeder Zugangspunkt (APN1, APN2) vom gesicherten oder ungesicherten Typ ist und einer elektronischen Steuereinheit (IVI, ECU1, ECU2) entspricht, wobei das Verfahren vom Kommunikationssystem (IVC) ausgeführt wird und enthält:
- einen Schritt der Eingangsverarbeitung (E100); und/oder
- einen Schritt der Ausgangsverarbeitung (E200); wobei der Schritt der Eingangsverarbeitung (E100) enthält:
- einen ersten Schritt des Empfangs (E110), mittels der zweiten Schnittstelle (IF2), eines eingehenden Pakets und einer Kennung eines Zugangspunkts (APN1, APN2), mittels dessen das eingehende Paket vom Modem (MDM) ausgehend vom Telekommunikationsnetzwerk (NTW1, NTW2) empfangen wurde, Empfangs-Zugangspunkt (APN1, APN2) genannt;
- einen ersten Schritt der Bestimmung (E120) eines Typs des Empfangs-Zugangspunkts;
- wenn der Empfangs-Zugangspunkt (APN2) vom ungesicherten Typ ist,
• einen ersten Schritt der Identifikation (E130) einer elektronischen Steuereinheit (IVI, ECU1, ECU2) entsprechend dem Empfangs-Zugangspunkt, Zieleinheit genannt; und
• einen ersten Schritt der Übertragung (E140) des eingehenden Pakets zur Zieleinheit (IVI, ECU1, ECU2) im Bereich einer Datenverbindungsschicht eines Stapels von TCP/IP-Protokollen mittels der ersten Schnittstelle (IF1), ohne die TCP/IP-Schicht zu implizieren;
- wenn der Empfangs-Zugangspunkt (APN1) vom gesicherten Typ ist,
• einen vom Kommunikationssystem (IVC) ausgeführten ersten internen Schritt der Verarbeitung (E150) des eingehenden Pakets durch einen Stapel von TCP/IP-Telekommunikationsprotokollen;
und wobei der Schritt der Ausgangsverarbeitung (E200) enthält:
- einen zweiten Schritt des Empfangs (E210), mittels der ersten Schnittstelle (IF1), eines von einer elektronischen Steuereinheit (IVI, ECU1, ECU2), Quelleneinheit genannt, kommenden ausgehenden Pakets;
- einen zweiten Schritt der Identifikation (E220) eines Zugangspunkts (APN1, APN2) entsprechend der elektronischen Quelleneinheit (IVI, ECU1, ECU2), Sende-Zugangspunkt genannt;
- einen zweiten Schritt der Bestimmung (E230) eines Typs des Sende-Zugangspunkts (APN1, APN2); und
- wenn der Sende-Zugangspunkt (APN2) vom ungesicherten Typ ist,
• einen zweiten Schritt der Übertragung (E240) des ausgehenden Pakets und einer Kennung des Sende-Zugangspunkts (APN1, APN2) im Bereich einer Datenverbindungsschicht eines Stapels von TCP/IP-Protokollen zum Modem (MDM), mittels der zweiten Schnittstelle (IF2), ohne die TCP/IP-Schicht des Stapels zu implizieren;
- wenn der Sende-Zugangspunkt APN1) vom gesicherten Typ ist,
• einen vom Kommunikationssystem (IVC) ausgeführten zweiten Schritt der internen Verarbeitung (E250) des ausgehenden Pakets durch einen Stapel von TCP/IP-Telekommunikationsprotokollen.

2. Weiterleitungsverfahren nach Anspruch 1, wobei
• die erste Schnittstelle (IF1) eine physikalische Datenübertragungsschicht und eine Vielzahl von logischen Schichten für die Anwendung mindestens eines Teils eines gesicherten virtuellen Netzwerks (V1), der einen gesicherten Zugangspunkt (APN1) enthält, und eines lokalen Netzwerks vom Typ Punktzu-Punkt (V2) enthält, das eine Datenverbindungsschicht (L2) zwischen der mindestens einen elektronischen Steuereinheit (IVI, ECU1, ECU2) und dem Kommunikationssystem (IVC) anwendet;
und wobei
• der erste Übertragungsschritt (E140) einen ersten Teilschritt der Hinzufügung einer Kopfzeile (E142) gemäß der Datenverbindungsschicht (L2) zum eingehenden Paket enthält; und/oder
• der zweite Übertragungsschritt (E240) einen zweiten Teilschritt der Hinzufügung einer Kopfzeile (E242) gemäß dem Datenverbindungsprotokoll zwischen dem Kommunikationssystem (IVC) und dem Modem (MDM) zum ausgehenden Paket enthält.

3. Weiterleitungsverfahren nach einem der vorhergehenden Ansprüche, wobei der erste Übertragungsschritt (E140) einen ersten Teilschritt der Bestätigung der Übernahme (E144) des eingehenden Pakets enthält.

4. Weiterleitungsverfahren nach einem der vorhergehenden Ansprüche, wobei:
- das mindestens eine Telekommunikationsnetzwerk (NTW1, NTW2) ein Kommunikationsnetzwerk mit mobilen Kommunikationsgeräten (ES, EU) ist;
- der erste interne Verarbeitungsschritt (E150) und/oder der zweite interne Verarbeitungsschritt (E250) einen ersten bzw. zweiten Teilschritt der Adressübersetzung, NAT, (E152, E252) zwischen dem mindestens einen Telekommunikationsnetzwerk (NTW1, NTW2) und dem Teil des gesicherten virtuellen Netzwerks (V1) enthält; und
- die erste Schnittstelle (IF1) eine Ethernet-Schnittstelle ist.

5. Computerprogramm, das Anweisungen aufweist, die, wenn sie von einem Prozessor eines EDV-Systems ausgeführt werden, die Anwendung eines Weiterleitungsverfahrens nach einem der Ansprüche 1 bis 4 verursachen.

6. Kommunikationssystem (IVC), das verbunden werden kann
- über eine erste Schnittstelle (IF1) mit mindestens einer elektronischen Steuereinheit (IVI, ECU1, ECU2); und
- über eine zweite Schnittstelle (IF2) mit einem Modem (MDM), das fähig ist, Datenpakete, die von der mindestens einen elektronischen Steuereinheit (IVI, ECU1, ECU2) kommen oder dafür bestimmt sind, ausgehende Pakete bzw. eingehende Pakete genannt, zum bzw. vom mindestens einen Telekommunikationsnetzwerk (NTW1, NTW2) mittels einer Vielzahl von Zugangspunkten (APN1, APN2) zu übertragen, wobei jeder Zugangspunkt (APN1, APN2) vom gesicherten Typ oder vom ungesicherten Typ ist und einer elektronischen Steuereinheit (IVI, ECU1, ECU2) entspricht;
wobei das Kommunikationssystem (IVC) außerdem enthält:
- erste Empfangseinrichtungen (IF1, ETH, P, MEMp, MEMd) eines ausgehenden Pakets von der mindestens einen elektronischen Steuereinheit (IVI, ECU1, ECU2), Quelleneinheit genannt;
- Identifikationseinrichtungen eines Zugangspunkts (APN1, APN2) entsprechend der elektronischen Quelleneinheit (IVI, ECU1, ECU2), Sende-Zugangspunkt (APN1, APN2) genannt;
- zweite Empfangseinrichtungen (IF2, I, P, MEMp, MEMd) vom Modem (MDM) eines eingehenden Pakets und einer Kennung eines Zugangspunkts (APN1, APN2), mittels dessen das eingehende Paket vom Modem (MDM) ausgehend vom Telekommunikationsnetzwerk (NTW1, NTW2) empfangen wurde, Empfangs-Zugangspunkt (APN1, APN2) genannt;
- Bestimmungseinrichtungen (P, MEMp, MEMd) eines Typs des Sende-Zugangspunkts und/oder des Empfangs-Zugangspunkts;
- Einrichtungen zur Übertragung (P, MEMp, MEMd, I, ETH, IF1, IF2) im Bereich einer Verbindungsschicht eines Stapels von TCP/IP-Protokollen, ohne die TCP/IP-Schicht des Stapels zu implizieren,
o des ausgehenden Pakets und der Kennung des Sende-Zugangspunkts (APN1, APN2) zum Modem (MDM), wenn der Typ des Sende-Zugangspunkts ungesichert ist;
o des eingehenden Pakets zur Zieleinheit (IVI, ECU1, ECU2), wenn der Typ des Empfangs-Zugangspunkts ungesichert ist;
- interne Verarbeitungseinrichtungen (P, MEMp, MEMd) des eingehenden Pakets und/oder des ausgehenden Pakets durch einen Stapel von TCP/IP-Telekommunikationsprotokollen, wenn der Typ des Empfangs-Zugangspunkts gesichert ist.

7. Mobiles Kommunikationsgerät (ES, UE), das ein Kommunikationssystem (IVC) nach dem vorhergehenden Anspruch und mindestens eine elektronische Steuereinheit (IVI, ECU1, ECU2) enthält, die über eine erste Schnittstelle (IF1) des Typs Ethernet, USB, oder CAN verbunden sind.

8. Fahrzeug (V), das ein Kommunikationsgerät (ES, UE) nach dem vorhergehenden Anspruch enthält.

## Claims

1. Method for routing data packets from or to at least one electronic control unit (IVI, ECU1, ECU2), referred to as outgoing packets, respectively incoming packets, said at least one electronic control unit (IVI, ECU1, ECU2) being connected to a communications system (IVC) via a first interface (IF1), said communications system (IVC) being connected via a second interface (IF2) to a modem (MDM) suitable for transferring said outgoing packets and said incoming packets to, respectively from, at least one telecommunications network (NTW1, NTW2) via a plurality of access points (APN1, APN2), each access point (APN1, APN2) being of the secure or non-secure type, and being associated with an electronic control unit (IVI, ECU1, ECU2), the method being executed by the communications system (IVC) and comprising:
- an incoming processing step (E100); and/or
- an outgoing processing step (E200);
in which the incoming processing step (E100) comprises:
- a first reception step (E110) for receiving, via the second interface (IF2), an incoming packet and an identifier of an access point (APN1, APN2) via which said incoming packet has been received by the modem (MDM) from said telecommunications network (NTW1, NTW2), referred to as reception access point (APN1, APN2);
- a first determination step (E120) for determining a type for the reception access point;
- if said reception access point (APN2) is of the non-secure type,
• a first identification step (E130) for identifying an electronic control unit (IVI, ECU1, ECU2) corresponding to the reception access point, referred to as recipient unit; and
• a first transfer step (E140) for transferring said incoming packet to the recipient unit (IVI, ECU1, ECU2) at a data link layer of a TCP/IP protocol stack, via the first interface (IF1), without involving the TCP/IP layer;
- if said reception access point (APN1) is of the secure type,
• a first internal processing step (E150) for the processing of said incoming packet by a TCP/IP telecommunications protocol stack executed by the communications system (IVC);
and in which the outgoing processing step (E200) comprises:
- a second reception step (E210) for receiving via the first interface (IF1) an outgoing packet from an electronic control unit (IVI, ECU1, ECU2), referred to as source unit;
- a second identification step (E220) for identifying an access point (APN1, APN2) corresponding to the electronic source unit (IVI, ECU1, ECU2), referred to as transmission access point;
- a second determination step (E230) for determining a type for the transmission access point (APN1, APN2); and,
- if said transmission access point (APN2) is of the non-secure type,
• a second transfer step (E240) for transferring said outgoing packet and an identifier of said transmission access point (APN1, APN2) at a data link layer of a TCP/IP protocol stack, to the modem (MDM), via the second interface (IF2), without involving the TCP/IP layer of said stack;
- if said transmission access point (APN1) is of the secure type,
• a second internal processing step (E250) for the processing of said outgoing packet by a TCP/IP telecommunications protocol stack executed by the communications system (IVC).

2. Routing method according to Claim 1, in which
• the first interface (IF1) comprises a data transmission physical layer and a plurality of logic layers to implement at least a part of a secure virtual network (V1) comprising a secure access point (APN1), and to implement a point-to-point local area network (V2) implementing a data link layer (L2) between said at least one electronic control unit (IVI, ECU1, ECU2) and said communications system (IVC);
and in which
• the first transfer step (E140) comprises a first substep (E142) for adding a header, in accordance with the data link layer (L2), to said incoming packet; and/or
• the second transfer step (E240) comprises a second substep (E242) for adding a header, in accordance with the data link protocol between said communications system (IVC) and said modem (MDM), to said outgoing packet.

3. Routing method according to one of the preceding claims, in which the first transfer step (E140) comprises a first substep (E144) confirming acceptance of said incoming packet.

4. Routing method according to any one of the preceding claims, in which:
- the at least one telecommunications network (NTW1, NTW2) is a communication network with mobile communication equipment (ES, EU);
- the first internal processing step (E150) and/or second internal processing step (E250) comprises a first, respectively second, substep of address translation, NAT, (E152, E252) between the at least one telecommunications network (NTW1, NTW2) and the part of the secure virtual network (V1); and
- the first interface (IF1) is an Ethernet interface.

5. Computer program including instructions which, when executed by a processor of a computing system, bring about the implementation of a routing method according to any one of Claims 1 to 4.

6. Communications system (IVC) suitable for being connected
- via a first interface (IF1) to at least one electronic control unit (IVI, ECU1, ECU2); and
- via a second interface (IF2) to a modem (MDM) suitable for transferring data packets from or to said at least one electronic control unit (IVI, ECU1, ECU2), referred to as outgoing packets, respectively incoming packets, to, respectively from, at least one telecommunications network (NTW1, NTW2) via a plurality of access points (APN1, APN2), each access point (APN1, APN2) being of the secure or non-secure type, and being associated with an electronic control unit (IVI, ECU1, ECU2);
said communications system (IVC) additionally comprising:
- first reception means (IF1, ETH, P, MEMp, MEMd) for receiving from said at least one electronic control unit (IVI, ECU1, ECU2), referred to as source unit, an outgoing packet;
- identification means for identifying an access point (APN1, APN2) corresponding to the electronic source unit (IVI, ECU1, ECU2), referred to as transmission access point (APN1, APN2) ;
- second reception means (IF2, I, P, MEMp, MEMd) for receiving from the modem (MDM) an incoming packet and an identifier of an access point (APN1, APN2) via which said incoming packet has been received by the modem (MDM) from said telecommunications network (NTW1, NTW2), referred to as reception access point (APN1, APN2);
- determination means (P, MEMp, MEMd) for determining a type for the transmission access point and/or reception access point;
- transfer means (P, MEMp, MEMd, I, ETH, IF1, IF2) for transferring at a link layer of a TCP/IP protocol stack, without involving the TCP/IP layer of said stack,
o said outgoing packet and the identifier of said transmission access point (APN1, APN2) to the modem (MDM) if the transmission access point type is non-secure;
o said incoming packet to the recipient unit (IVI, ECU1, ECU2) if the reception access point type is non-secure;
- internal processing means (P, MEMp, MEMd) for the processing of said incoming packet and/or said outgoing packet by a TCP/IP telecommunications protocol stack, if the reception access point type is secure.

7. Mobile communications equipment (ES, UE) comprising a communications system (IVC) according to the preceding claim and at least one electronic control unit (IVI, ECU1, ECU2), which are connected via a first interface (IF1) of the Ethernet, USB or CAN type.

8. Vehicle (V) comprising communications equipment (ES, UE) according to the preceding claim.
